(19) Europäisches Patentamt
European Patent Office
Office européen des brevets

(11) Veröffentlichungsnummer: **0 028 344**
**A1**

(12) # EUROPÄISCHE PATENTANMELDUNG

(21) Anmeldenummer: 80106371.0

(51) Int. Cl.[3]: C 08 J 3/02

(22) Anmeldetag: 20.10.80

(30) Priorität: 31.10.79 DE 2944091

(43) Veröffentlichungstag der Anmeldung:
13.05.81 Patentblatt 81/19

(84) Benannte Vertragsstaaten:
BE DE FR GB IT NL

(71) Anmelder: BAYER AG
Zentralbereich Patente, Marken und Lizenzen
D-5090 Leverkusen 1, Bayerwerk(DE)

(72) Erfinder: Zabrocki, Karl, Dr.
Edelfalter 33
D-4044 Büttgen(DE)

(72) Erfinder: Goossens, John
Roggendorfstrasse 51
D-5000 Köln 80(DE)

(72) Erfinder: Lindner, Christian, Dr.
Riehler Strasse 200
D-5000 Köln 60(DE)

(72) Erfinder: Menold, Richard, Dr.
Schopenhauerstrasse 11
D-5090 Leverkusen 1(DE)

(54) **Dispersionen von Kautschuken in organischen Flüssigkeiten und ihre Herstellung.**

(57) Verfahren zur Herstellung wasserarmer und wasserfreier Dispersionen von Kautschuken in organischen Flüssigkeiten, bei dem ein wäßriger Kautschuklatex, der ionische Emulgatoren enthält, gegebenenfalls in Gegenwart von Dispergierhilfsmitteln mit Hilfe eines Fällmittels in eine organische Flüssigkeit umdispergiert und anschließend die Wasserphase abgetrennt wird, wobei als Fällmittel mindestens ein wasserlösliches ionisches Tensid verwendet wird, dessen elektrische Ladung der des ionischen Emulgators entgegengesetzt ist.

EP 0 028 344 A1

Croydon Printing Company Ltd.

0028344



BAYER AKTIENGESELLSCHAFT
Zentralbereich
Patente, Marken und Lizenzen

5090 Leverkusen, Bayerwerk
G/Rz

**BEZEICHNUNG GEÄNDERT**
**siehe Titelseite**

## Dispersionen von Kautschuken in organischen Flüssigkeiten

Die Erfindung betrifft wasserarme und wasserfreie Dispersionen von vernetzten Kautschuken in organischen Flüssigkeiten und ein Verfahren zu ihrer Herstellung.

Unter Kautschuk werden im folgenden vernetzte Polymere mit elastomeren Eigenschaften verstanden, deren Gelgehalt bei ≥30, vorzugsweise ≥50 Gew.-% liegt, und die Homopolymerisate oder Copolymerisate sein können. Die Erfindung geht aus von wäßrigen Latices dieser Kautschuke.

Unter organischen Dispersionen versteht man feine Verteilungen der genannten Kautschuke in einer organischen Flüssigkeit, z.B. in Lösungsmitteln oder Monomeren, bei denen die Polymeren die disperse und die organischen Flüssigkeiten die kontinuierliche Phase darstellen. Die dispergierten Teilchen besitzen dabei mittlere Teilchendurchmesser von 0,01 bis 20 µm.

Man hat bereits wäßrige Kautschuklatices in organische Flüssigkeiten umdispergiert. Beispielsweise werden gemäß DE-AS 2 047 427 Dien-Kautschuklatices in Monomergemische umdispergiert, indem man den Latex mit den Monomeren (als organische kontinuierliche Phase) verrührt und ein übliches Koaguliermittel zusetzt.

Für viele Verwendungen solcher Dispersionen ist es notwendig, das aus dem Latex stammende Wasser aus der organischen Dispersion zu entfernen. Hierzu sind technisch aufwendige Maßnahmen erforderlich, z.B. Zentrifugieren, Destillation oder Druckanwendung, welche sogar zur teilweisen Zerstörung der organischen Dispersion führen können.

Gegenstand der Erfindung ist ein Verfahren zur Herstellung wasserarmer und wasserfreier Dispersionen von Kautschuken in organischen Flüssigkeiten, bei dem ein wäßriger Kautschuklatex, der ionische Emulgatoren enthält, gegebenenfalls in Gegenwart von Dispergiermitteln mit Hilfe eines Fällmittels in eine organische Flüssigkeit umdispergiert und anschließend die Wasserphase abgetrennt wird, das dadurch gekennzeichnet ist, daß als Fällmittel mindestens ein wasserlösliches, ionisches Tensid verwendet wird, dessen elektrische Ladung der des ionischen Emulgators entgegengesetzt ist.

Die Kautschuke liegen im allgemeinen als durch Emulsionspolymerisation gewonnene wäßrige Latices vor. Kautschuke im Sinne der Erfindung sind z.B.:

1. Vernetzte Dienkautschuke, d.h., Homopolymerisate von konjugierten Dienen mit 4 - 8 C-Atomen wie Butadien, Isopren, Chloropren (Butadien ist besonders bevorzugt) oder deren Copolymerisate mit bis zu 60 Gew.-%, bevorzugt bis 10 - 40 Gew.-%, eines Vinylmonomeren wie z.B. Acrylnitril, Methacrylnitril, Styrol, α-Methylstyrol, Halogenstyrole, $C_1$-$C_4$-Alkylstyrole, $C_1$-$C_6$-Alkylacrylate und -methacrylate, Alkylglykol-di-acrylate und -methacrylate sowie Divinylbenzol.
2. Vernetzte Acrylatkautschuke, d.h., Homo- und Copolymerisate von $C_1$-$C_{10}$-Alkylacrylaten, beispielsweise Homopolymerisate von Methylacrylat, Ethylacrylat, n-Butylacrylat oder Copolymerisate mit bis zu 40 Gew.-%, bevorzugt nicht mehr als 10 Gew.-%, Monovinylverbindungen, wie beispielsweise Acrylnitril, Methacrylnitril, Vinylbutylether, Vinylmethylether, Styrol, α-Methylstyrol, Chlorstyrol, p-tert.-Butylstyrol, Methylstyrol, Acrylsäure, Methacrylsäure, Methyl-, Ethyl-, Propyl-, n-Butyl-, tert.-Butylacrylate und -methacrylate, Vinylsulfonsäure. Bevorzugt werden solche Acrylatkautschuk-Homo- bzw. Copolymerisate eingesetzt, die 0,01 - 8 Gew.-%, vorzugsweise 0,01 - 6 Gew.-%, Divinyl- oder Polyallylverbindungen und/oder n-Methylolacrylamid- (oder -Methacrylamid)-Derivate enthalten, die als Vernetzer wirken. Beispiele sind Divinylbenzol, Ethylenglykol-, Propylenglykol-, Polyalkyloxidglykolacrylsäureester oder -methacrylsäureester, Triallylcyanurat, Methacrylsäurevinylester, N-Methylolacrylamide oder -methacrylamide, Butadien, Isopren. Bevorzugte Acrylatkautschuke sind vernetzte Poly-n-butylacrylate, die als vernetzte Monomere bis zu 5 Gew.-% 1,2-Butandioldiacrylat und/oder Butadien und/oder N-Methoxymethylacrylamid und/oder Triallylcyanurat enthalten.

Butadien-Homopolymerisate bilden besonders schnell wasserabgebende Systeme. Sie sind daher bevorzugt.

Als kontinuierliche organische Phase kommen prinzipiell alle niedrigviskosen organischen Flüssigkeiten in Betracht, welche mit den zu dispergierenden Kautschuken beim Lagern keine chemischen Reaktionen eingehen.

Bevorzugt sind zu nennen:

a) aliphatische, cycloaliphatische Kohlenwasserstoffe und/oder deren Halogenderivate mit 1 - 20 C-Atomen, welche gegebenenfalls Doppelbindungen enthalten können, z.B. Dichlormethan, Dichlorethan, n-Hexan, n-Heptan, Cyclohexan, Cyclopentan, Cyclopenten, Dicyclopentadien, Petrolether;

b) aromatische Kohlenwasserstoffe und/oder deren Halogenderivate mit 6 - 20 C-Atomen, z.B. Benzol, Toluol, Xylol, Chlorbenzol, $C_1$-$C_{10}$-Alkylbenzole, Styrol, Divinylbenzol sowie weitere substituierte Kohlenwasserstoffe, z.B. Anisol, Nitrobenzol, Chlorstyrol;

c) Alkohole und Polyalkohole mit 1 - 20 C-Atomen, z.B. Methanol, Ethanol, Butanole, Hexanole, Cyclohexanol, Ethylenglykole, Diethylenglykol, Propylenglykol, Glycerin;

d) Ketone mit 3 - 10 C-Atomen, z.B. Aceton, Methylethylketon, Pentanon-3, Cyclohexanon, Vinylmethylketon;

e) Ester gesättigter und ungesättigter $C_1$-$C_{10}$-Mono- und Dicarbonsäuren mit $C_1$-$C_{10}$-gesättigten Mono-, Di- und Trialkoholen, z.B. Ethylacetat, Methylacetat, (Meth-) Acrylsäureester von $C_1$-$C_{10}$-Monoalkoholen, Hydroxiethyl (meth-)acrylat, Hydroxipropyl(meth-)acrylat, Vinyl-

und Alkylester von $C_1$-$C_{10}$-Mono- und Dicarbonsäuren, z.B. Vinylacetat, Adipinsäurebisallylester, (Meth-)acrylsäureester von Di- und Triolen, z.B. Hexandiolbisacrylat, Ethylenglykoldimethacrylat, Polyethylenglykol-mono- und -dimethacrylat, 1,1,1-Trimethylolpropantrimethacrylat;

f) N-haltige Verbindungen mit 3 - 10 C-Atomen, z.B. Dimethylformamid, Acetonitril, Propionitril, (Meth)-acrylnitril, N,N-Diethylaminoethanol;

g) epoxihaltige Verbindungen mit 3 - 10 C-Atomen, z.B. Vinyloxiran, Glycidyl(meth)acrylat, Allylglycidylether.

Bevorzugt werden Mischungen aus mindestens zwei organischen Flüssigkeiten aus mindestens zwei der Gruppen a) bis g). Die Auswahl von Art und Menge der Komponenten der kontinuierlichen Phase richtet sich in erster Linie nach dem Anwendungszweck der organischen Dispersionen. Für Bereiche, bei denen der Kautschuk im Endzustand in einem polymeren organischen Material vorliegen soll, hat sich die Verwendung von Gemischen polymerisierbarer Flüssigkeiten als organische kontinuierliche Phase als besonders günstig erwiesen, wobei diese wenig oder keine sonstigen Stoffe enthält.

Für die Auswahl der Bestandteile der kontinuierlichen Phase ist deren Löslichkeitsparameter wichtig. Besonders homogene Dispersionen mit besonders schneller Wasserabscheidung erhält man, wenn der $\delta$-Parameter zwischen 9,0 und 10, vorzugsweise zwischen 9,2 und 9,8 liegt. Der $\delta$-Parameter ist definiert und erläutert z.B. von H. Burrell: Interchemical Review, Vol. 14, Nr. 1 (1955), S. 3-16, ibid Nr. 2, S. 31-46; Werte für $\delta$-Parameter zahlreicher Substanzen finden sich bei K.L. Hoy: Journ. of Paint Technology, Vol. 42, Nr. 541 (1970) S. 76-114.

Als besonders geeignet haben sich Mischungen aus 95 bis 65 Gew.-% Styrol und 5 bis 35 Gew.-% Methylethylketon oder Acrylnitril erwiesen.

Die Mengenverhältnisse von dispergiertem Kautschuk zu organischer kontinuierlicher Phase können bevorzugt so gewählt werden, daß die organische Dispersion nach der Abtrennung des Wassers 1 - 30, vorzugsweise 5 - 13 Gew.-% Kautschuk enthält.

Zur Durchführung des Verfahrens kann man den Kautschuklatex in der als kontinuierliche Phase gewählten organischen Flüssigkeit, gegebenenfalls in Anwesenheit von bis zu 4 Gew.-% (bezogen auf kontinuierliche Phase) eines Dispergierhilfsmittels suspendieren. Alle organolöslichen üblichen Dispergierhilfsmittel sind verwendbar. Bevorzugt sind polymere (Meth-)Acrylsäureester von $C_6$-$C_{16}$-Monoalkoholen, partielle Umsetzungsprodukte aus Maleinsäure/$\alpha$-Olefincopolymerisaten mit $C_6$-$C_{16}$-Monoalkoholen, wie sie z.B.bei G.Sackmann, Angew.Makromol.Chemie 69 (1978),Nr.1041,S.141-156,beschrieben sind, Derivate von Fettsäuren, Harzsäuren und lösliche Polyolefine bzw. Polydiolefine wie z.B. Polybutadien (copolymere). Die Suspendierung erfolgt unter starkem Rühren. Man kann etwa 3 - 50 Gew.-Teile Latex in 100 Gew.-Teile organischer Phase suspendieren und erhält so - in Abstimmung mit der Latex-Konzentration - Kautschuk-Gehalte von 1 - 30 Gew.-% in der organischen Dispersion.

Anschließend kann man unter Rühren ein Tensid aus wäßriger Lösung als Fällmittel zuführen. Die Konzentration dieser wäßrigen Tensidlösung ist bevorzugt unter 30 Gew.-%,insbesondere unter 5 Gew.-% Tensid.Die Art des Tensids richtet sich nach dem für die Herstellung des Kautschuks verwendeten Emulgator: bei einem anionisch emulgierten Kautschuk verwendet man als Fällmittel ein kationisches Tensid und umgekehrt. Vorzugsweise werden anionisch emulgierte Kautschuke verwendet, bei denen als Emulgatoren Alkali- oder Ammoniumsalze von Harzsäuren, $C_{12}$-$C_{24}$-Monocarbonsäuren, $C_{10}$-$C_{20}$-Sulfonsäuren oder $C_{10}$-$C_{20}$-Monoalkylsulfate eingesetzt sind.

Als Tenside zur Fällung derartiger anionisch emulgierter Latices sind Sulfonium, Phosphonium und Ammoniumsalze längerkettiger Alkane verwendbar. Bevorzugt sind Ammoniumsalze der folgenden Struktur:

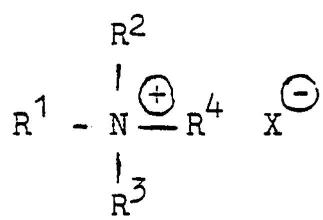

in der

$R^1$ einen $C_{10}$-$C_{20}$-Alkanrest, dessen Alkylkette ggf. durch $-SO_2-NH$, -CO-O-, -CO-NH-, -O- Gruppen unterbrochen ist,

$R^2$, $R^3$ je einen $C_1$-$C_4$-Alkanrest,

$R^4$ einen $C_1$-$C_{11}$-Alkanrest, den Benzylrest oder die Gruppe $-CH_2-COO\ R^2$,

$X^{\ominus}$ $Br^{\ominus}$, $Cl^{\ominus}$, $CH_3COO^{\ominus}$, $\left[SO_4^{2-}\right]_{1/2}$ , 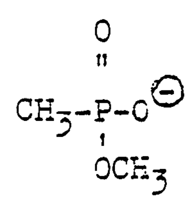

darstellt.

Besonders bevorzugt ist folgende Verbindung:

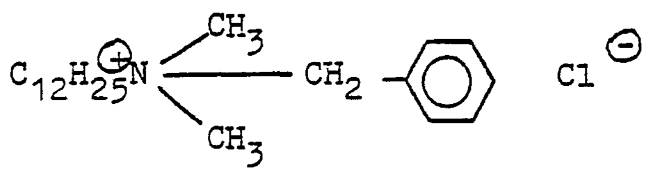

(Handelsbezeichnung Zephirol®).

Als Tenside zur Fällung kationisch emulgierter Kautschuke kommen die als Emulgatoren zur Herstellung anionisch emulgierter Kautschuke genannten Substanzen in Betracht.

Die für den gesamten Prozess benötigten Temperaturen liegen zwischen 0 und 100°C, vorzugsweise bei 20 - 40°C.

Die Mengen an zuzugebendem Tensid betragen 0,5 - 20 Gew.-%, vorzugsweise 1,0 - 10 Gew.-%, an Festsubstanz des Tensids, bezogen auf Festsubstanz des zu dispergierenden wäßrigen Latex. Die im Einzelfall benötigte minimale Tensidmenge kann innerhalb dieser Grenzen ggf. durch wenige Vorversuche ermittelt werden. Das Tensid wird unter intensivem Rühren der Suspension aus der organischen kontinuierlichen Phase und dem Latex beigefügt und anschließend kurz weiterverrührt. Nach Beendigung der Durchmischung bilden sich sofort oder nach spätestens 3 Stunden Standzeit die organische Dispersion des Kautschuks sowie eine separate Wasserphase aus. Die Wasserphase trennt sich spontan; dies kann, falls gewünscht, durch übliche Techniken, z.B. Zentrifugieren, weiter beschleunigt werden. Anschließend trennt man die Phasen in üblicher Weise (z.B. mit Hilfe eines Scheidetrichters) und erhält so die organische Dispersion. Diese Dispersionen enthalten in der Regel $<5$ %, vorzugsweise $<1,5$ % Wasser.

Die erfindungsgemäß gewonnenen organischen Dispersionen sind fließfähig und stabil; sie sehen milchig oder opak aus. Ihre Viskosität kann durch Zusatz von Säuren oder

Basen verändert werden. Sie sind wenig empfindlich gegen Elektrolyte und lassen sich mit Lösungsmittelgemischen der gleichen Zusammensetzung wie ihre kontinuierliche Phase verdünnen. Sie lassen sich als Kombinationspartner bei der Herstellung von Mischungen mit Thermoplasten verwenden. Besteht die kontinuierliche Phase aus polymerisierbaren Monomeren, so kann die Dispersion durch Polymerisation zu schlagzähen Kunststoffen und Beschichtungen verarbeitet werden.

In den folgenden Beispielen sind Teile immer Gewichtsteile.

Beispiele:

In Tabelle 1 sind die verwendeten Kautschukmaterialien aufgeführt. Der Kautschukgehalt des Latex ist angegeben in Gew.-%, bezogen auf das Gewicht der gesamten Emulsion. Der Gelgehalt ist angegeben in Gew.-%, bezogen auf 100 Gew.-Tle des vorhandenen Kautschuks. Die Teilchengröße ist gemessen mit Hilfe der Lichtstreuung, siehe dazu: M. Hoffmann u.a. "Polymeranalytik", Georg-Thieme-Verlag, Stuttgart (1977).

In Tabelle 2 sind die Rezepturen der Beispiele angegeben.

Erläuterungen:

Dispergierhilfsmittel A: 40%ige Lösung eines Copolymeren aus Diisobutylen und Maleinsäureanhydrid, welches mit höheren Alkanolen umgesetzt wurde. Siehe dazu: G.Sackmann, loc. cit.

Dispergierhilfsmittel B: Poly-n-decylmethacrylat; $[\eta]$ = 25,2 ml/g in Toluol.

Tensid C: 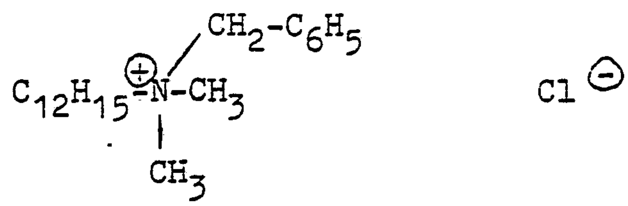

Tensid D: 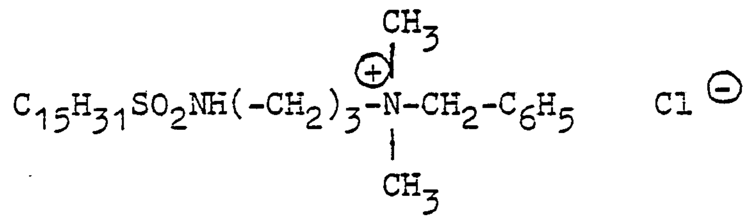

Siehe dazu DE-AS 1 127 865.

<u>Herstellungsvorschrift:</u>

Die organische Flüssigkeit wird vorgelegt und das Dispergierhilfsmittel sowie - falls gewünscht - 0,1 %, bezogen auf die organische Flüssigkeit, eines phenolischen Polymerisationsstabilisators zugefügt. Dann setzt man unter Rühren die wäßrige Kautschukemulsion innerhalb von 10 Min. zu und gibt nach kurzer Rührzeit die Tensidlösung - ebenfalls innerhalb von 10 Min. - zu. Man rührt noch 10 bis 30 Min. weiter und gibt dann in einen Scheidetrichter, wobei sich die Wasserphase in der aufgeführten Zeit absetzt. Man trennt die Phasen und erhält die erfindungsgemäßen organischen Dispersionen.

Tabelle 3 faßt Vergleichsversuche zu Beispiel 1 zusammen, bei denen anstelle des Tensids übliche Fällmittel eingesetzt wurden. Wie aus den Versuchen ersichtlich, liefern diese Fällmittel keine spontan Wasser abscheidenden Systeme.

TABELLE 1

Verwendete Kautschukmaterialien

| Material | Art des Kautschuks ggf. Zusammensetzung in Gew.-% | Polymergehalt des Latex Gew.-% | Latex-Teilchengröße, gemessen mit Lichtstreuung (nm) | Gelgehalt (Gew.-%) | bei Latex-Herstellung benutzter Emulgator |
|---|---|---|---|---|---|
| I | Polybutadien | 45,7 | 495 | 85,0 | Harzseife |
| II | Polybutadien | 35,6 | 143 | 96,9 | Harzseife |
| III | 98 n-Butylacrylat<br>2 Hexandiolbisacrylat | 34 | 120 | 85 | $C_{12}$-Alkylsulfonat |
| IV | Polychloropren | 50,6 | 273 | 89,9 | kationischer Emulgator |

TABELLE 2

Rezepturen der Beispiele

| Beispiel | organ. Flüssigkeit Gew.-Teile | Kautschukmaterial | Dispergierhilfsmittel | Fällmittel | Zeit bis zur Wasserabtrennung | Wassergehalt der organ. Dispersion |
|---|---|---|---|---|---|---|
| 1 | 220 Tle Acrylnitril<br>580 Tle Styrol | 219 Tle I | 0,8 Tle A | 100 Tle 2,5 %ige Lösung von Tensid C | 30 min | 1,2 % |
| 2 | 220 Tle Acrylnitril<br>580 Tle Styrol | 256 Tle I | 0,8 Tle A | " | 2 Stdn. | 0,3 % |
| 3 | 220 Tle Acrylnitril<br>580 Tle Styrol | 219 Tle I | 0,8 Tle A | 140 Tle 2,5 %ige Lösung von Tensid D | 30 min | 1,4 % |
| 4 | 220 Tle Acrylnitril<br>580 Tle Styrol | 99 Tle I | 0,8 Tle A | 100 Tle 2,5 %ige Lösung von Tensid C | 30 min | 2,0 % |
| 5 | 80 Acrylnitril<br>720 Tle Styrol | 138 Tle I | 0,8 Tle A | " | 30 min | 1,9 % |
| 6 | 220 Tle Acrylnitril<br>580 Tle Styrol | 196 Tle II<br>66 Tle I | 0,8 Tle A | 150 Tle 2,5 %ige Lösung von Tensid C | 30 min | 1,2 % |
| 7 | 220 Tle Acrylnitril<br>580 Tle Styrol | 99 Tle I | 0,3 Tle B | 100 Tle 2,5 %ige Lösung von Tensid C | 30 min | 0,1 % |
| 8 | 560 Tle Styrol<br>240 Tle Butanon-2 | 255,4 Tle III | 0,3 Tle B | " | 30 min | 3,1 % |
| 9 | 780 Tle Styrol<br>20 Tle Acrylnitril | 124,9 Tle II | 0,8 Tle A | 100 Tle 2,5 %ige Lösung von Tensid C | 30 min | 0,9 % |
| 10 | 240 Tle Toluol<br>560 Tle Methyläthylketon | 198 Tle VI | 0,8 Tle A | 200 Tle 2 %ige Lösung eines $C_{12}$-Alkylsulfonats | 30 min | 3,3 % |

TABELLE 3

Vergleichsversuche: In der Rezeptur des Beispiels 1 wurde das Tensid durch die folgenden üblichen Fällmittel ersetzt:

| Vergleichsversuch | Fällmittel: 100 ml 2,5%ige Lösung in Wasser | Wasserabtrennung bei eintägigem Stehenlassen |
|---|---|---|
| a | $MgSO_4 \cdot 7\ H_2O$ | keine Wasserabtrennung beobachtbar |
| b | $Na_2SO_4 \cdot 10\ H_2O$ | keine Wasserabtrennung beobachtbar |
| c | $CaCl_2 \cdot 2\ H_2O$ | keine Wasserabtrennung beobachtbar |
| d | $H_2SO_4$ | keine Wasserabtrennung beobachtbar |
| e | $CH_3COOH$ | keine Wasserabtrennung beobachtbar |

Patentansprüche:

1. Verfahren zur Herstellung wasserarmer und wasserfreier Dispersionen von Kautschuken in organischen Flüssigkeiten, bei dem ein wäßriger Kautschuklatex, der ionische Emulgatoren enthält, gegebenenfalls in Gegenwart von Dispergierhilfsmitteln mit Hilfe eines Fällmittels in eine organische Flüssigkeit umdispergiert und anschließend die Wasserphase abgetrennt wird, dadurch gekennzeichnet, daß als Fällmittel mindestens ein wasserlösliches ionisches Tensid verwendet wird, dessen elektrische Ladung der des ionischen Emulgators entgegengesetzt ist.

2. Verfahren nach Anspruch 1, dadurch gekennzeichnet, daß anionisch emulgierte Kautschuke mit Hilfe kationischer Tenside als Fällmittel in organischen Dispersionen umdispergiert werden.

3. Verfahren gemäß Ansprüchen 1 und 2, dadurch gekennzeichnet, daß die organische Flüssigkeit mindestens teilweise aus polymerisierbaren Monomeren besteht.

4. Organische Kautschukdispersionen, hergestellt gemäß Anspruch 1, bestehend aus 1 bis 30 Gew.-% dispergiertem Kautschuk und 99 bis 80 Gew.-% organischer Flüssigkeit.

0028344

Nummer der Anmeldung

EP 80 10 6371

Europäisches Patentamt

# EUROPÄISCHER RECHERCHENBERICHT

| EINSCHLÄGIGE DOKUMENTE | | | KLASSIFIKATION DER ANMELDUNG (Int Cl.3) |
|---|---|---|---|
| Kategorie | Kennzeichnung des Dokuments mit Angabe, soweit erforderlich, der maßgeblichen Teile | betrifft Anspruch | |
| X | DE - A - 2 118 638 (DU PONT DE NEMOURS)<br>* Anspruch 1; Beispiele 3-5 * | 1,2,4 | C 08 J 3/02 |
| X | US - A - 3 574 161 (R.P. CAMPION et al.)<br>* Anspruch 1 * | 1,2,4 | |
| D | DE - A - 2 047 427 (TORAY INDUSTRIES)<br>* Anspruch 1; Seite 9, Zeilen 22-25; Seite 10, Zeilen 1-6 * | 3 | |

RECHERCHIERTE SACHGEBIETE (Int. Cl.3)

C 08 J 3/02

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 22-01-1981 | V. HUMBEECK |